# EUROPÄISCHE PATENTSCHRIFT

(11) **EP 1 296 848 B1**
(45) Veröffentlichungstag und Bekanntmachung des Hinweises auf die Patenterteilung: **13.09.2006**
(21) Anmeldenummer: 01951482.7
(22) Anmeldetag: 07.05.2001
(51) Int. Cl.: B60K 17/356, F16H 61/46

(54) **HYDROSTATISCHER FAHRANTRIEB MIT DIFFERENTIALSPERRE**
HYDROSTATIC VEHICLE DRIVE SYSTEM COMPRISING A DIFFERENTIAL LOCK
SYSTEME D'ENTRAINEMENT HYDROSTATIQUE AVEC BLOCAGE DU DIFFERENTIEL

(30) Priorität: 05.07.2000 DE 10032514
(43) Veröffentlichungstag der Anmeldung: 02.04.2003
(73) Patentinhaber: Brueninghaus Hydromatik GmbH, 89275 Elchingen (DE)
(72) Erfinder: BECK, Jochen, 89077 Ulm (DE)
(74) Vertreter: Körfer, Thomas
(86) Internationale Anmeldenummer: PCT/EP2001/005164
(87) Internationale Veröffentlichungsnummer: WO 2002/002364

(56) Entgegenhaltungen:
- EP-A- 0 226 844
- DE-A- 3 346 481
- DE-A- 19 833 942
- US-A- 3 650 109

## Beschreibung

Die Erfindung betrifft einen hydrostatischen Fahrantrieb mit Differentialsperre.

Ein hydrostatischer Fahrantrieb nach dem Oberbegriff des Anspruchs 1 ist bereits aus der DE 198 33 942 A1 bekannt. Bei dem aus dieser Druckschrift hervorgehenden hydrostatischen Fahrantrieb sind zwei Hydropumpen mit mindestens zwei Hydromotoren kreuzweise verschaltet, so daß jeweils die erste Hydropumpe, der erste Hydromotor, die zweite Hydropumpe und der zweite Hydromotor seriell beim Differentialsperrbetrieb in dem Arbeitskreislauf angeordnet sind. Die serielle Anordnung der Hydropumpen und Hydromotoren hat den Vorteil, daß durch beide Hydromotoren der gleiche Volumenstrom strömt und die Hydromotoren bei gleichem Schluckvolumen zwangsweise die gleiche abtreibende Drehzahl haben. Ein Schlupf an einem der beiden getrennten, von den Hydromotoren angetriebenen Antriebssträngen tritt somit nicht auf. In dieser Druckschrift ist ferner die Umschaltung zwischen dem vorstehend beschriebenen Differentialsperrbetrieb und einem Differentialentsperrbetrieb, bei welchem die Hydropumpen und die Hydromotoren parallel zueinander angeordnet sind, beschrieben. Sämtliche in dieser Druckschrift beschriebenen Hydromotoren sind jedoch sogenannte Konstantmotoren mit fest vorgegebenem, nicht variierbarem Schluckvolumen. Verstellvorrichtungen zur Verstellung des Schluckvolumens der Hydromotoren werden bei den aus dieser Druckschrift hervorgehenden hydrostatischen Fahrantrieben nicht verwendet.

Die Tatsache, daß das Schluckvolumen der Hydromotoren bei den in der DE 198 33 942 A1 beschriebenen hydrostatischen Fahrantrieb konstant ist, hat den Nachteil, daß das Übersetzungsverhältnis des hydrostatischen Getriebes, welches durch das Verhältnis aus dem Schluckvolumen der hydrostatischen Motoren zu dem Fördervolumen der hydrostatischen Pumpen gegeben ist, nur durch Verändern des Fördervolumens der hydrostatischen Pumpen variierbar ist. Der Variationsbereich ist somit begrenzt. Insbesondere bei Baumaschinen, beispielsweise bei Schaufelladern, ist jedoch ein großer Variationsbereich des Übersetzungsverhältnisses erwünscht, da im Arbeitsbetrieb auf der Baustelle ein relativ niedriges Übersetzungsverhältnis mit hohem Drehmoment und im Straßentransportbetrieb ein relativ hohes Übersetzungsverhältnis mit hoher Abtriebsdrehzahl gefordert wird.

Aus der DE 33 46 481 A1 ist ein hydrostatischer Fahrantrieb bekannt, bei dem zwei Hydromotoren seriell miteinander verschaltet werden können. Die beiden Hydromotoren in serieller Verschaltung werden durch eine erste und eine zweite Hydropumpe in einem Hauptkreis mit Druckmittel beaufschlagt. Die erste und die zweite Hydropumpe sind parallel zueinander angeordnet und fördern gemeinsam in den Hauptkreis. Dem ersten sowie dem zweiten Hydromotor ist jeweils eine Verstellvorrichtung zugeordnet. Die Verstellvorrichtung ist mit einem Stelldruck beaufschlagbar, welcher in Abhängigkeit von einer Kraft eines Elektronmagneten sowie einem eingestellten Schluckvolumen des verstellbaren Hydromotors geregelt wird.

Der Erfindung liegt deshalb die Aufgabe zugrunde, den Variationsbereich des Übersetzungsverhältnisses eines hydrostatischen Getriebes nach dem Oberbegriffs des Anspruchs 1 zu erweitern und eine Anpassung des Schluckvolumens bei stromaufwärtiger Druckerhöhung zu ermöglichen.

Die Aufgabe wird durch die kennzeichnenden Merkmale des Anspruchs 1 in Verbindung mit den gattungsbildenden Merkmalen gelöst. Die Unteransprüche beinhalten vorteilhafte Weiterbildungen der Erfindung.

Erfindungsgemäß wird vorgeschlagen, das Schluckvolumen der zumindest zwei Hydromotoren in dem Arbeitskreislauf variabel auszugestalten und die Hydromotoren mit einer Verstellvorrichtung zu versehen. Dies ermöglicht einen größeren Variationsbereich des Übersetzungsverhältnisses des hydrostatischen Getriebes.

Es ist eine Synchronisierungs-Einrichtung vorgesehen, die die Verstellung der Verstellvorrichtungen der Hydromotoren synchronisiert. Da die Hydromotoren beim Differentialsperrbetrieb in dem Arbeitskreislauf seriell angeordnet sind, sollen die Hydromotoren im allgemeinen mit gleicher Drehzahl abtreiben. Dies ist nur bei gleichem Schluckvolumen der beiden Hydromotoren gewährleistet, was durch die Synchronisations-Einrichtung sichergestellt wird. Die Synchronisations-Einrichtung kann beispielsweise ein jeder Verstellvorrichtung vorgeschaltetes, elektrisch betätigbares Stellventil und eine die Stellventile der Hydromotoren synchron ansteuernde elektronische Steuereinheit umfassen. Durch die elektrische Ansteuerung wird die Synchronisierung vereinfacht.

Es ist zusätzlich eine Stelldruckregelung vorgesehen, die das Schluckvolumen des zugeordneten Hydromotors vergrößert, wenn der Druck in dem Arbeitskreislauf stromaufwärts des zugeordneten Hydromotors ansteigt. Dadurch wird der zugeordnete Hydromotor auf zur Erzeugung eines größeren Drehmoments weiter ausgeschwenkt, wenn dem hydrostatischen Fahrantrieb eine Widerstand entgegengesetzt wird, beispielsweise wenn ein Schaufellader die Schaufel in ein Haufwerk einfährt. Die Stelldruckregelung und die Synchronisierungs-Einrichtung kann sich dabei der gleichen Stellventile bedienen.

In einem Differentialentsperrbetrieb sind die beiden Hydropumpen vorzugsweise nur mit einem der beiden Hydromotoren parallel geschaltet. Dadurch ergibt sich ein vergrößerter Variationsbereich des Übersetzungsverhältnisses. Auf das zusätzliche Drehmoment des zweiten Hydromotors kann im Straßentransportbetrieb verzichtet werden.

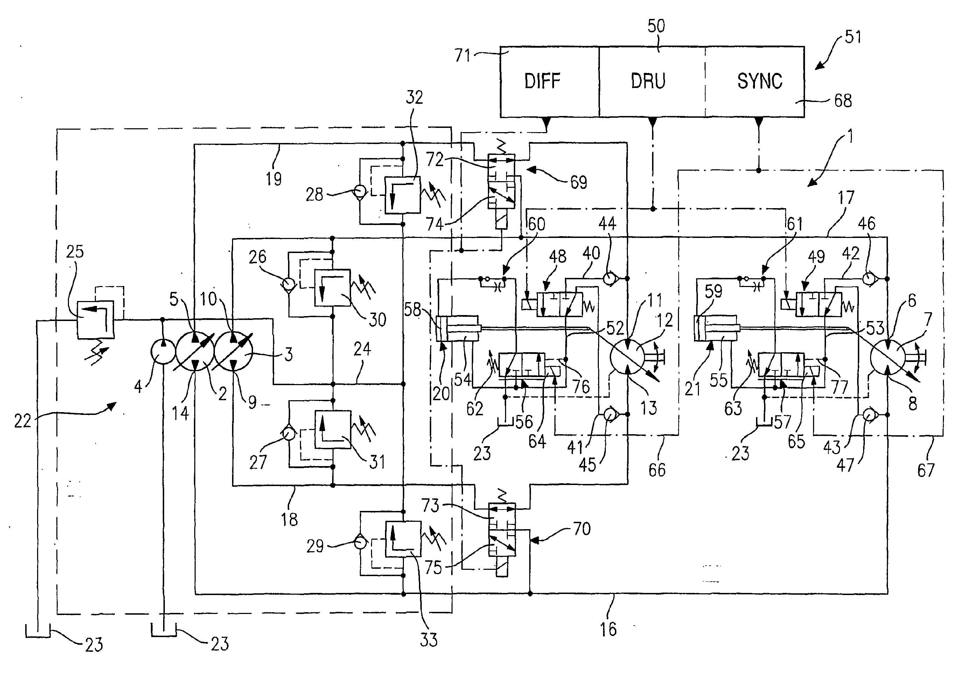

Nachfolgend wird ein Ausführungsbeispiel der Erfindung unter Bezugnahme auf die Zeichnung näher beschrieben. Die einzige Figur der Zeichnung zeigt ein hydraulisches Prinzipschaltbild eines Ausführungsbeispiels des erfindungsgemäßen hydrostatischen Fahrantriebs.

Der erfindungsgemäße hydrostatische Fahrantrieb ist allgemein mit dem Bezugszeichen 1 bezeichnet. Von einem nicht dargestellten Antriebsmotor, beispielsweise einem Verbrennungsmotor, werden eine als Verstellpumpe ausgebildete erste Hydropumpe 2, eine ebenfalls als Verstellpumpe ausgebildete zweite Hydropumpe 3 und eine Hilfspumpe 4 angetrieben. Die erste und zweite Hydropumpe 2 und 3 und die Hilfspumpe 4 sind vorzugsweise auf einer gemeinsamen Antriebswelle angeordnet. Ferner sind zwei ebenfalls verstellbar ausgebildete Hydromotoren 7 und 12 vorgesehen.

Ein erster Anschluß 14 der ersten Hydropumpe 2 ist über einen Arbeitskreislauf-Abschnitt 18 mit einem ersten Anschluß 8 eines ersten Hydromotors 7 verbunden. Ein zweiter Anschluß 6 des ersten Hydromotors 7 ist über einen Arbeitskreislauf-Abschnitt 17 mit einem ersten Anschluß 10 der zweiten Hydropumpe 3 verbunden. Der zweite Anschluß 9 der zweiten Hydropumpe 3 ist hydraulisch über einen Arbeitskreislauf-Abschnitt 18 mit einem ersten Anschluß 13 eines zweiten Hydromotors 12 verbunden. Der zweite Anschluß 11 des zweiten Hydromotors 12 steht hingegen hydraulisch über einen Arbeitskreislauf-Abschnitt 19 mit dem zweiten Anschluß 5 der ersten Hydropumpe 2 in Verbindung. Die Hydropumpen 2 und 3 und die Hydromotoren 7 und 12 sind daher in dem Differentialsperrbetrieb seriell so zueinander angeordnet, daß jeweils einer Hydropumpe 2, 3 in dem hydraulischen Arbeitskreislauf 16-19 ein Hydromotor 7, 12 folgt und umgekehrt einem Hydromotor 7,12 wiederum eine Hydropumpe 2,3 folgt. Der von den Hydropumpen 2 und 3 geförderte Förderstrom wird daher zwangsweise durch beide Hydromotoren 7 und 12 geführt, wobei die beiden Hydromotoren 7 und 12 unterschiedliche Antriebsstränge, beispielsweise unterschiedliche Antriebsräder antreiben.

Ein Schlupf an einem der beiden Antriebsstränge wird durch die erfindungsgemäße Maßnahme wirkungsvoll verhindert, da der mit dem entsprechenden Antriebsstrang verbundene Hydromotor 7, 12 in den hydraulischen Arbeitskreislauf 16-19 so eingebunden ist, daß sich das Schluckvolumen dieses Hydromotors 7, 12 nicht ohne Erhöhung des Fördervolumens der beiden Hydropumpen 2 und 3 erhöhen kann. Einem Schlupf der angetriebenen Antriebsräder oder gar einem Durchdrehen der Antriebsräder wird daher entgegengewirkt.

Aus der Zeichnung ist ferner eine allgemein mit dem Bezugszeichen 22 bezeichnete Einspeiseeinrichtung zu ersehen. Die Hilfspumpe 4 der Einspeiseeinrichtung 22 saugt Druckfluid aus einem Druckfluid-Tank 23 nach und speist dieses in eine Einspeiseleitung 24 ein. Über ein mit dem Druckfluid-Tank 23 verbundenes Druckbegrenzungsventil 25 wird der Druck in der Einspeiseleitung 24 auf ein konstantes Niveau eingeregelt. Über Rückschlagventile 26 bis 29 wird das nachzuspeisende Druckfluid in diejenigen Abschnitte 16-19 des geschlossenen, hydraulischen Arbeitskreislaufs 16-19 eingespeist, die jeweils den Niederdruck führen. Dabei ist zu beachten, daß bei einer Umkehrung der Drehrichtung der Hydromotoren 7, 12 und somit einer Umkehrung der Förderrichtung der beiden Hydropumpen 2 und 3 sich die Hochdruck und Niederdruck führenden Leitungsabschnitte des hydraulischen Arbeitskreislaufs 16-19 umkehren.

Druckbegrenzungsventile 30 bis 33 stellen sicher, daß der Druck in den jeweils Hochdruck führenden Leitungsabschnitten 16-19 des geschlossenen hydraulischen Arbeitskreislaufs einen vorgegebenen Maximalwert nicht überschreitet. Wird dieser Maximalwert erreicht, so öffnet das mit diesem Leitungsabschnitt verbundene Druckbegrenzungsventil und läßt Druckfluid über das Druckbegrenzungsventil 25 zu dem Druckfluid-Tank 23 ab.

Im Gegensatz zu einem gattungsgemäßen hydrostatischen Fahrantrieb sind die Hydromotoren 7 und 12 jeweils mit einer Verstellvorrichtung 20 bzw. 21 versehen, mit welcher das Schluckvolumen des zugeordneten Hydromotors 12 bzw. 7 verstellbar ist. Dazu ist jeweils der Abschnitt stromaufwärts und stromabwärts des Hydromotors 12 bzw. 7 über jeweils eine Verbindungsleitung 40, 41 bzw. 42, 43, in welcher jeweils ein Rückschlagventil 44, 45 bzw. 46, 47 angeordnet sind, mit einem Drehrichtungs- und Umschaltventil 48 bzw. 49 verbunden.

Die Drehrichtungs-Umschaltventile 48 und 49 sind im Ausführungsbeispiel elektromagnetisch ansteuerbar und mit einer Drehrichtungsumschalteinheit 50 einer elektronischen Steuereinheit 51 verbunden. Bei Änderung der Drehrichtung werden die Drehrichtungsumschaltventile 48 und 49 jeweils so umgeschaltet, daß der jeweils Hochdruck führende Abschnitt stromaufwärts des Hydromotors 12 bzw. 7 mit einer Verbindungsleitung 52 bzw. 53 verbunden wird. Diese Verbindungsleitung 52 bzw. 53 ist direkt mit einer ersten Druckkammer 54 bzw. 55 der Verstellvorrichtung 20 bzw. 21 des zugeordneten Hydromotors 12 bzw. 7 verbunden. Andererseits ist diese Verbindungsleitung 52 über ein Stellventil 56 bzw. 57 und ein Rückschlagventil mit parallel geschalteter Drossel 60 bzw. 61 mit einer zweiten Druckkammer 58 bzw. 59 der Verstellvorrichtung 20 bzw. 21 verbunden.

In der dargestellten Grundstellung ist die zweite Druckkammer 58 bzw. 59 über das Stellventil 56 bzw. 57 mit dem Druckfluid-Tank 23 verbunden. Das Stellventil 56 bzw. 57 vergleicht den stromaufwärts des jeweiligen Hydromotors 12 bzw. 7 herrschenden Arbeitsdruck, welcher über die Steuerleitung 76 bzw. 77 anliegt, mit einem Gegendruck, der von einer einstellbaren Rückstellfeder 62 bzw. 63 ausgeübt wird. Steigt der Druck in dem Arbeitskreislauf aufwärts des jeweiligen Hydromotors 12 bzw. 7 an, so wird auch die zweite Druckkammer 58 bzw. 59 mit zunehmendem Druck beaufschlagt, so daß der zugeordnete Hydromotor auf ein größeres Schluckvolumen und somit ein größeres Drehmoment weiter ausgeschwenkt wird. Diese Regelung ist beispielsweise notwendig, wenn ein mit dem erfindungsgemäßen Fahrantrieb 1 ausgestatteter Schaufellader die Schaufel in ein Haufwerk einfährt und der Fahrantrieb 1 somit einem erhöhten Widerstand ausgesetzt wird, so daß ein höheres Abtriebs-Drehmoment benötigt wird. Eine solche Betriebsweise ist mit Hydromotoren, welche ein festes Schluckvolumen aufweisen, nicht möglich.

Da die beiden Hydromotoren 7 und 12 in dem hydraulischen Arbeitskreislauf 16-19 in dem oben beschriebenen Differentialsperrbetrieb seriell angeordnet sind und somit durch beide Hydromotoren 7 und 12 das gleiche Fördervolumen fließt, ist es notwendig, den das Schluckvolumen vorgebenden Schwenkwinkel der Hydromotoren 7 und 12 über die Verstellvorrichtungen 20 und 21 zu synchronisieren, so daß zwei baugleiche Hydromotoren 12 und 7 stets dem gleichen Schwenkwinkel unterworfen sind. Hierzu weisen die Stellventile 56 und 57 zusätzlich jeweils einen Elektromagneten 64 und 65 auf, mit welchen die Stellventile 56 und 57 gegen die Rückstellfedern 62 und 63 zusätzlich beaufschlagbar sind. Die Elektromagneten 64 und 65 sind über elektrische Steuerleitungen 66 und 67 mit einer Synchronisierungseinheit 68 der elektronischen Steuereinheit 51 verbunden. Mittels der Synchronisiereinheit 68 der elektronischen Steuereinheit 51 werden beide Elektromagneten 64 und 65 in gleicher Weise angesteuert, so daß sich an den Hydromotoren 12 und 7 der gleiche Schwenkwinkel und somit das gleiche Schluckvolumen einstellt, solange die vorstehend beschriebene Stelldruckregelung, mit welcher der Druck stromaufwärts der Hydromotoren 12 und 7 überwacht wird, nicht anspricht. Die vorstehend beschriebene Stelldruckregelung kann auch für beide Hydromotoren 12 und 7 gemeinsam erfolgen. Es ist jedoch vorteilhaft, die Stelldruckregelung für jeden Hydromotor 12 und 7 separat auszuführen, da bei der Blockierung nur eines Antriebsstrangs nur die Druckregelung für diesen Antriebsstrang anspricht.

Vorstehend wurde der Differentialsperrbetrieb des erfindungsgemäßen hydrostatischen Fahrantriebs 1 beschrieben. Das in der Zeichnung dargestellte Ausführungsbeispiel verfügt auch über einen Differentialentsperrbetrieb. Zwischen dem Differentialsperrbetrieb und dem Differentialentsperrbetrieb wird über Differentialsperr-Umschaltventile 69 und 70 umgeschaltet. Die Differentialsperr-Umschaltventile 69 und 70 werden über eine Differentialsperreinheit 71 der elektronischen Steuereinheit 51 umgeschaltet. Wenn sich die Differentialsperre-Umschaltventile 69, 70 in der Schaltstellung 72 bzw. 73 befinden, befindet sich der erfindungsgemäße hydrostatische Fahrantrieb 1 in dem vorstehend beschriebenen Differentialsperrbetrieb, in welchem die Hydropumpen 2 und 3 und die Hydromotoren 12 und 7 seriell in dem Arbeitskreislauf 16-19 angeordnet sind.

Befinden sich die Differentialsperre-Umschaltventile 69, 70 in ihren Schaltstellungen 74 und 75, so befindet sich der erfindungsgemäße hydrostatische Fahrantrieb 1 in einen Differentialentsperrbetrieb. In dieser Betriebsweise sind die beiden Hydropumpen 2 und 3 zueinander parallel geschaltet. Zusätzlich ist der erste Hydromotor 7 parallel zu den beiden Hydropumpen 2 und 3 geschaltet, während der zweite Hydromotor 12 von dem Arbeitskreislauf 16-19 getrennt ist. Grundsätzlich wäre es auch denkbar, beide Hydromotoren 7 und 12 den beiden Hydropumpen 2 und 3 parallel zu schalten. Entsprechend der erfindungsgemäßen Weiterbildung wird jedoch vorgeschlagen, nur einen der beiden Hydromotoren 7, 12, im Ausführungsbeispiel den Hydromotor 7, den beiden Hydropumpen 2 und 3 parallel zu schalten. Dies hat den Vorteil eines erhöhten Variationsbereiches des Übersetzungsverhältnisses des hydrostatischen Getriebes in Richtung auf hohe Drehzahlen, da dem doppelten Fördervolumen der beiden parallel geschalteten Hydropumpen 2 und 3 nur das einfache Schluckvolumen nur eines der beiden Hydromotoren 7 gegenübersteht. In Straßentransportbetrieb besteht der Wunsch nach einer hohen Abtriebsdrehzahl und somit einer hohen Transportgeschwindigkeit, wobei das Abtriebsdrehmoment in den Hintergrund rückt, so daß auf das Drehmoment des zweiten Hydromotors 12 verzichtet werden kann.

Die Erfindung ist nicht auf das dargestellte Ausführungsbeispiel beschränkt und kann beispielsweise bei einer Vielzahl anderer Ausgestaltungen der Verstellvorrichtungen 20, 21 zum Einsatz kommen. Ferner können auch mehr als zwei Hydropumpen 2, 3 und Hydromotoren 7, 12 im Differentialsperrbetrieb seriell hintereinander geschaltet werden bzw. im Differentialentsperrbetrieb parallel geschaltet werden.

## Patentansprüche

1. Hydrostatischer Fahrantrieb (1) mit zumindest einer ersten und einer zweiten Hydropumpe (2, 3) und zumindest einem ersten und einem zweiten Hydromotor (7, 12),
wobei in einem Differentialsperrbetrieb die Hydropumpen (2, 3) und die Hydromotoren (7, 12) so miteinander gekoppelt sind, daß ein erster Anschluß (14) der ersten Hydropumpe (2) mit einem ersten Anschluß (8) des ersten Hydromotors (7), ein zweiter Anschluß (6) des ersten Hydromotors (7) mit einem ersten Anschluß (10) der zweiten Hydropumpe (3), ein zweiter Anschluß (9) der zweiten Hydropumpe (3) mit einem ersten Anschluß (13) des zweiten Hydromotors (12) und ein zweiter Anschluß (11) des zweiten Hydromotors (12) mit einem zweiten Anschluß (5) der ersten Hydropumpe (2) verbunden ist,
**dadurch gekennzeichnet,**
**daß** das Schluckvolumen des ersten Hydromotors (7) und des zweiten Hydromotors (12) mittels jeweils einer Verstellvorrichtung (20, 21) verstellbar ist und
**daß** eine Synchronisierungs-Einrichtung (68, 64, 65, 56, 57) vorgesehen ist, die die Verstellung der Verstellvorrichtungen (20, 21) der Hydromotoren (7, 12) synchronisiert und
**daß** zumindest eine Stelldruckregelung (56, 48; 57, 49) vorgesehen ist, die das Schluckvolumen des zugeordneten Hydromotors (12; 7) vergrößert, wenn der Druck in dem die Hydropumpen (2, 3) mit den Hydromotoren (7, 12) verbindenden Arbeitskreislauf (16-19) stromaufwärts des zugeordneten Hydromotors (20, 21) ansteigt, wobei
die Stelldruckregelung (56, 48; 57, 49) ein jeder Verstellvorrichtung (20, 21) vorgeschaltetes Stellventil (56, 57) umfaßt, dessen Steuerleitung (76, 77) mit dem den höheren Druck führenden Abschnitt (18, 19; 16, 17) des den zugeordneten Hydromotor (7; 12) mit den Hydropumpen (2, 3) verbindenden Arbeitskreislaufs (16-19) verbunden ist.

2. Hydrostatischer Fahrantrieb nach Anspruch 1,
**dadurch gekennzeichnet,**
**daß** die Synchronisierungs-Einrichtung (68, 64, 65, 56, 57) jeweils ein jeder Verstellvorrichtung (20, 21) vorgeschaltetes, elektrisch betätigbares Stellventil (56, 57) und eine die Stellventile (56, 57) der Hydromotoren (7, 12) synchron ansteuernde, elektronische Steuereinheit (68) umfaßt.

3. Hydrostatischer Fahrantrieb nach Anspruch 1 oder 2,
**dadurch gekennzeichnet,**
**daß** jedes Stellventil (56, 57) über ein elektrisch betätigbares Drehrichtungs-Umschaltventil (48, 49) mit den an den zugeordneten Hydromotor (7, 12) angeschlossenen Abschnitten (18, 19; 16, 17) des Arbeitskreislaufs (16-19) verbunden ist.

4. Hydrostatischer Fahrantrieb nach Anspruch 2,
**dadurch gekennzeichnet,**
**daß** die Stellventile (56, 57) der Synchronisierungs-Einrichtung (68, 64, 65, 56, 57) und der Stelldruckregelung (56, 48, 57, 49) identisch sind.

5. Hydrostatischer Fahrantrieb nach einem der Ansprüche 1 bis 4,
**dadurch gekennzeichnet,**
**daß** in einem Differentialentsperrbetrieb die erste und die zweite Hydropumpe (2, 3) mit einem der beiden Hydromotoren (7) parallel geschaltet ist und der andere Hydromotor (12) abgeschaltet ist.

6. Hydrostatischer Fahrantrieb nach einem der Ansprüche 1 bis 5,
**dadurch gekennzeichnet,**
**daß** die Hydromotoren (7, 12) getrennte Antriebsstränge antreiben.

## Claims

1. Hydrostatic vehicle drive system (1) comprising at least one first and one second hydraulic pump (2, 3) and at least one first and one second hydraulic motor (7, 12),
wherein the hydraulic pumps (2, 3) and the hydraulic motors (7, 12) are coupled together in differential lock mode such that a first connection (14) of the first hydraulic pump (2) is connected to a first connection (8) of the first hydraulic motor (7), a second connection (6) of the first hydraulic motor (7) is connected to a first connection (10) of the second hydraulic pump (3), a second connection (9) of the second hydraulic pump (3) is connected to a first connection (13) of the second hydraulic motor (12), and a second connection (11) of the second hydraulic motor (12) is connected to a second connection (5) of the first hydraulic pump (2),
**characterised in**
**that** the absorption volume of the first hydraulic motor (7) and of the second hydraulic motor (12) can be adjusted by means of a respective adjusting device (20, 21), and
**that** a synchronizing mechanism (68, 64, 65, 56, 57) which synchronizes the adjustment of the adjusting devices (20, 21) of the hydraulic motors (7, 12) is provided, and that at least one actuating pressure regulation system (56, 48; 57, 49) is provided which increases the absorption volume of the associated hydraulic motor (12; 7) when there is a rise in the pressure in the working circuit (16-19) connecting the hydraulic pumps (2, 3) to the hydraulic motors (7, 12) upstream of the associated hydraulic motor (20, 21), wherein
the actuating pressure regulation system (56, 48; 57, 49) comprises a servo valve (56, 57) which is connected upstream of each adjusting device (20, 21) and the control line (76, 77) of which is connected to the section (18, 19; 16, 17), carrying the higher pressure, of the working circuit (16-19) which connects the associated hydraulic motor (7; 12) to the hydraulic pumps (2, 3).

2. Hydrostatic vehicle drive system according to Claim 1,
**characterised in**
**that** the synchronizing mechanism (68, 64, 65, 56, 57) in each case comprises an electrically operable servo valve (56, 57), which is connected upstream of each adjusting device (20, 21), and an electronic control unit (68), which activates the servo valves (56, 57) of the hydraulic motors (7, 12) in synchronism.

3. Hydrostatic vehicle drive system according to Claim 1 or 2,
**characterised in**
**that** each servo valve (56, 57) is connected via an electrically operable direction of rotation-changeover valve (48, 49) to the sections (18, 19; 16, 17) of the working circuit (16-19) which are connected to the associated hydraulic motor (7, 12).

4. Hydrostatic vehicle drive system according to Claim 2,
**characterised in**
**that** the servo valves (56, 57) of the synchronizing mechanism (68, 64, 65, 56, 57) and the actuating pressure regulation system (56, 48, 57, 49) are identical.

5. Hydrostatic vehicle drive system according to any one of Claims 1 to 4,
**characterised in**
**that** the first and the second hydraulic pump (2, 3) is connected in parallel with one of the two hydraulic
motors (7) and the other hydraulic motor (12) is disconnected in unlocked differential mode.

6. Hydrostatic vehicle drive system according to any one of Claims 1 to 5,
**characterised in**
**that** the hydraulic motors (7, 12) drive separate drive trains.

## Revendications

1. Système d'entraînement hydrostatique (1) comprenant au moins une première et une seconde pompes hydrauliques (2, 3) et au moins un premier et un second moteurs hydrauliques (7, 12),
un mécanisme de blocage du différentiel, les pompes hydrauliques (2, 3) et les moteurs hydrauliques (7, 12) étant couplés les uns aux autres de sorte qu'un premier raccordement (14) de la première pompe hydraulique (2) est relié à un premier raccordement (8) du premier moteur hydraulique (7), un second raccordement (6) du premier moteur hydraulique (7) à un premier raccordement (10) de la seconde pompe hydraulique (3), un second raccordement (9) de la seconde pompe hydraulique (3) à un premier raccordement (13) du second moteur hydraulique (12) et un second raccordement (11) du second moteur hydraulique (12) à un second raccordement (5) de la première pompe hydraulique (2), **caractérisé en ce que** le volume d'absorption du premier moteur hydraulique (7) et du second moteur hydraulique (12) peut être réglé au moyen d'un dispositif de réglage respectif (20, 21) et
**en ce qu'**un dispositif de synchronisation (68, 64, 65, 56, 57) est prévu, qui synchronise le réglage des dispositifs de réglage (20, 21) des moteurs hydrauliques (7, 12) et
**en ce qu'**au moins une régulation de pression de commande (56, 48 ; 57, 49) est prévue, qui augmente le volume d'absorption du moteur hydraulique (12 ; 7) associé, lorsque la pression dans le circuit de travail (16-19) reliant les pompes hydrauliques (2, 3) aux moteurs hydrauliques (7, 12) augmente en amont du moteur hydraulique (20, 21) associé,
la régulation de pression de commande (56, 48 ; 57, 49) comportant une soupape de commande (56, 57) montée en amont de chaque dispositif de réglage (20, 21), soupape dont la conduite de commande (76, 77) est reliée à la section de conduite de pression accrue (18, 19 ; 16, 17) du circuit de travail (16-19) reliant le moteur hydraulique (7 ; 12) associé aux pompes hydrauliques (2, 3).

2. Système d'entraînement hydrostatique selon la revendication 1, **caractérisé en ce que** le dispositif de synchronisation (68, 64, 65, 56, 57) comporte respectivement une soupape de commande (56, 57) pouvant être actionnée électriquement, montée en amont de chaque dispositif de réglage (20, 21) et une unité de commande (68) électronique, commandant de manière synchrone les soupapes de commande (56, 57) des moteurs hydrauliques (7, 12).

3. Système d'entraînement hydrostatique selon la revendication 1 ou 2, **caractérisé en ce que** chaque soupape de commande (56, 57) est reliée par une soupape d'inversion de direction de rotation (48, 49) pouvant être actionnée électriquement aux sections (18, 19 ; 16, 17) du circuit de travail (16-19) raccordées au moteur hydraulique (7, 12) associé.

4. Système d'entraînement hydrostatique selon la revendication 2, **caractérisé en ce que** les soupapes de commande (56, 57) du dispositif de synchronisation (68, 64, 65, 66, 56, 57) et de la régulation de pression de commande (56, 48, 57, 49) sont identiques.

5. Système d'entraînement hydrostatique selon l'une quelconque des revendications 1 à 4, **caractérisé en ce que** dans un mécanisme de blocage du différentiel, la première et la seconde pompes hydrauliques (2, 3) sont montées en parallèle avec un des deux moteurs hydrauliques (7) et l'autre moteur hydraulique (12) est débranché.

6. Système d'entraînement hydrostatique selon l'une quelconque des revendications 1 à 5, **caractérisé en ce que** les moteurs hydrauliques (7, 12) entraînent des transmissions séparées.
